# EUROPÄISCHE PATENTANMELDUNG

(11) **EP 2 604 464 A1**
(43) Veröffentlichungstag der Anmeldung: **19.06.2013**
(21) Anmeldenummer: 12192565.5
(22) Anmeldetag: 14.11.2012
(51) Int. Cl.: B60K 26/02, B60W 50/16

(54) **Fahrpedalsystem für ein Fahrzeug, Fahrzeug mit einem derartigen Fahrpedalsystem, Verfahren zum Steuern eines aktiven Fahrpedals, Computerprogramm und computerlesbares Medium dafür**

(30) Priorität: 12.12.2011 DE 102011088272
(71) Anmelder: ROBERT BOSCH GMBH, 70442 Stuttgart (DE)
(72) Erfinder: Baeuerle, Michael, 71735 Eberdingen (DE); Ries-Mueller, Klaus, 74906 Bad Rappenau (DE)

(57) **Zusammenfassung**

Ein Fahrpedalsystem 12 für ein Fahrzeug 10 umfasst ein Fahrpedal 14 zum Einstellen der Geschwindigkeit des Fahrzeugs 10 durch einen Fahrer und eine Steuerung 18, die dazu ausgeführt ist ein Schlechtwegsignal zu erfassen und das Fahrpedal 14 anzusteuern. Das Fahrpedal 14 ist dazu ausgeführt, eine variable Rückstellkraft 46 einzustellen. Die Steuerung 18 ist dazu ausgeführt, die Rückstellkraft 46 zumindest in einem Teilbereich 48 eines Pedalwegs des Fahrpedals 14 zu erhöhen, wenn das Schlechtwegsignal erfasst wird.

## Beschreibung

### GEBIET DER ERFINDUNG

Die Erfindung betrifft ein Fahrpedalsystem für ein Fahrzeug, ein Fahrzeug sowie ein Verfahren, ein Computerprogamm und ein computerlesbares Medium zum Steuern eines aktiven Fahrpedals.

### HINTERGRUND DER ERFINDUNG

Bei bestimmten Fahrzeugtypen ist es seit Jahren üblich, eine Schlechtwegerkennung vorzusehen. Bei einer Schlechtwegerkennung werden zum Beispiel Raddrehzahlsignale ausgewertet. Ein kurzzeitiges Schwanken der Raddrehzahl kann dabei auf eine schlechte Wegstrecke hindeuten. Wird eine schlechte Wegstrecke erkannt, werden beispielsweise bestimmte Diagnosefunktionen, wie etwa ein Erkennung von Aussetzern im Motorlauf, abgeschaltet, um zu vermeiden, dass die durch die Schlechtwegstrecke verursachten Schwankungen als Fehler von Komponenten im Fahrzeug gedeutet werden.

Seit langem sind aktive Fahrpedale bekannt, die beispielsweise bei zu dichtem Auffahren vibrieren bzw. eine Gegenkraft zur Kraft des Fahrers aufbringen. Ein aktives Fahrpedal kann beispielsweise einen Stellmotor umfassen, der die Gegenkraft aufbringt. Der Stellmotor kann etwa in die Vorspannung der Pedalrückholfeder eingreifen. Ein aktives Fahrpedal ist in der DE 103 24 811 A1 beschrieben.

### ZUSAMMENFASSUNG DER ERFINDUNG

Beim Überfahren einer Schlechtwegstrecke kann es durch eine Fahrzeugbewegung, die durch die Schlechtwegstrecke erzeugt wird, beispielsweise eine Schlingerbewegung oder ein Rütteln, bzw. eine daraus resultierende ungewollte Bewegung des Fahrerfußes zu einer unkontrollierten Ansteuerung des Fahrpedals durch den Fahrer kommen. Dies kann zu einem weiteren, gefährlichen und sehr unangenehmen Aufschaukeln des Fahrzeugs führen, wenn die unkontrollierte Ansteuerung die ungewollte Bewegung des Fahrerfußes zusätzlich noch verstärkt. Dieser Effekt wird auch Bonanzaeffekt genannt.

Es ist Aufgabe der Erfindung ungewollte Ansteuerbewegungen des Fahrers auf das Fahrpedal bei einer Schlechtwegstrecke zu verhindern oder zumindest zu reduzieren.

Diese Aufgabe wird durch den Gegenstand der unabhängigen Ansprüche gelöst. Weitere Ausführungsformen der Erfindung ergeben sich aus den abhängigen Ansprüchen und aus der folgenden Beschreibung.

Ein erster Aspekt der Erfindung betrifft ein Fahrpedalsystem für ein Fahrzeug. Ein Fahrpedalsystem kann dabei ein aktives Fahrpedal (mit beispielsweise einem Stellmotor) und eine zugehörige Steuerung umfassen, die dazu ausgeführt ist, den Stellmotor und damit die vom Fahrpedal aufgebrachte Gegenkraft zu steuern.

Gemäß einer Ausführungsform der Erfindung umfasst das Fahrpedalsystem ein Fahrpedal zum Einstellen der Geschwindigkeit des Fahrzeugs durch einen Fahrer. Das Fahrpedal kann vom Fahrer des Fahrzeugs dazu verwendet werden, das Fahrzeug zu beschleunigen. Das Fahrpedalsystem umfasst eine Steuerung, die dazu ausgeführt ist ein Schlechtwegsignal zu erfassen und das Fahrpedal anzusteuern. Das Fahrpedal ist dazu ausgeführt, beispielsweise aufgrund von Steuersignalen der Steuerung an den Stellmotor, eine (variable) Rückstellkraft bzw. Gegenkraft aktiv einzustellen. Mit anderen Worten kann das Fahrpedal eine Rückstellkrafteinstellvorrichtung, wie etwa einen Stellmotor, umfassen. Das Fahrpedal kann also als aktives Fahrpedal ausgeführt sein, d.h. es kann dem Fahrer abhängig vom Fahrzustand bzw. Fahrzeugzustand eine Rückmeldung zu geben.

Die Steuerung ist dazu ausgeführt, die Rückstellkraft zumindest in einem Teilbereich eines Pedalwegs des Fahrpedals zu erhöhen, wenn das Schlechtwegsignal erfasst wird. Auf diese Weise kann die Empfindlichkeit eines aktiven Fahrpedals während dem Überfahren einer Schlechtwegstrecke reduziert werden. Der Fahrer muss pro zunehmenden Pedalweg nun eine größere Kraftdifferenz aufbringen. Den ungewollten Ansteuerbewegungen des Fahrers wirkt damit eine erhöhte Gegen- bzw. Rückstellkraft des Fahrpedals entgegen, die auf diese Weise die ungewollten Ansteuerbewegungen dämpft.

Insgesamt kann die Pedalempfindlichkeit (das Verhältnis von Pedalwegdifferenz zur entsprechenden Pedalkraftdifferenz) um ein Mehrfaches reduziert werden, womit die Rückwirkung bzw. Mitkopplung der Schlechtwegstrecke über die Karosseriedynamik und den Fahrerfuß ebenfalls entsprechend reduziert werden kann.

Nach dem Ende der Schlechtwegstrecke kann wieder auf die übliche Fahrpedalcharakteristik bzw. eine Grundkraft des Fahrpedals umgeschaltet werden. Mit anderen Worten kann die Rückstellkraft des Fahrpedals auf eine Grundkraft zurückgesetzt werden, wenn die Steuerung das Ende der Schlechtwegstrecke erkennt.

Gemäß einer Ausführungsform der Erfindung ist die Steuerung dazu ausgeführt, das Schlechtwegsignal aus der aktuellen Raddrehzahl zu ermitteln. Beispielsweise kann die Steuerung ein Signal aus einem Drehzahlsensor empfangen und dieses Signal auf kurzzeitige periodische Schwankungen untersuchen, die auf eine Schlechtwegstrecke hindeuten.

Gemäß einer Ausführungsform der Erfindung ist die Steuerung dazu ausgeführt, eine Pendelbewegung des Fahrpedals zu erkennen. Am aktiven Fahrpedal ist in der Regel ein Sensor angebracht, der die aktuelle Stellung des Fahrpedals ermittelt. Weist das Sensorsignal dieses Sensors regelmäßige Schwankungen bzw. Schwingungen auf, deutet dies auf eine Pendelbewegung des Fahrpedals hin.

Gemäß einer Ausführungsform der Erfindung ist die Steuerung dazu ausgeführt, die Rückstellkraft weiter zu erhöhen, bis die Pendelbewegung (bzw. das Maximum der Pendelbewegung) unter einen vorgegebenen Grenzwert sinkt. Die Rückstellkraft des Fahrpedals kann also von einem kleinen Anfangswert immer weiter erhöht werden, bis eine ungewollte Pendelbewegung des Fahrpedals gedämpft wurde.

Gemäß einer Ausführungsform der Erfindung ist die Steuerung dazu ausgeführt, eine aktuelle Fahrpedalposition zu speichern und die Rückstellkraft in einem Teilbereich des Pedalwegs des Fahrpedals in der Umgebung einer aktuellen Fahrpedalposition zu erhöhen. Bei erkanntem Schlechtweg kann beispielsweise die letzte stabile Pedalposition "eingefroren" werden, indem etwa unmittelbar oberhalb dieser Position eine Kraftprogression in die Pedalcharakteristik aufgeprägt wird. Die letzte stabile Pedalposition kann dabei die aktuelle Fahrpedalposition sein, die ermittelt wurde, bevor das Schlechtwegsignal erfasst wurde, d.h. beispielsweise zu einem Zeitpunkt, kurz bevor das Fahrzeug in die Schlechtwegstrecke eingefahren ist.

Gemäß einer Ausführungsform der Erfindung liegt der Teilbereich, in dem die Rückstellkraft gegenüber der Grundkraft erhöht ist, oberhalb der aktuellen Fahrpedalposition. Somit wird insbesondere ein ungewolltes Durchdrücken des Fahrpedals verhindert. Trotzdem ist die Empfindlichkeit des Fahrpedals beim Lösen des Pedals und damit beim Reduzieren der Geschwindigkeit des Fahrzeugs nicht vermindert.

Ein weiterer Aspekt der Erfindung betrifft ein Fahrzeug mit einem Fahrpedalsystem so wie es obenstehend und untenstehend beschrieben ist, beispielsweise ein Straßenfahrzeug, ein PKW oder LKW.

Ein weiterer Aspekt der Erfindung betrifft ein Verfahren zum Steuern eines aktiven Fahrpedals eines Fahrzeugs. Dieses Verfahren kann beispielsweise von der Steuerung des Fahrpedalsystems durchgeführt werden.

Gemäß einer Ausführungsform der Erfindung umfasst das Verfahren die Schritte von: Erfassen eines Schlechtwegsignals; Erhöhen der Rückstellkraft des Fahrpedals zumindest in einem Teilbereich eines Pedalwegs des Fahrpedals, wenn das Schlechtwegsignal erfasst wird.

Dabei ist zu verstehen, dass Merkmale des Fahrpedalsystems und insbesondere Merkmale der Steuerung Merkmale des Verfahrens sein können und umgekehrt.

Ein weiterer Aspekt der Erfindung betrifft ein Computerprogamm, das, wenn es auf einem Prozessor ausgeführt wird, den Prozessor dazu anleitet, die Schritte des Verfahrens zum Steuern eines aktiven Fahrpedals durchzuführen. Ein weiterer Aspekt der Erfindung betrifft ein Computerlesbares Medium, auf dem ein derartiges Computerprogramm gespeichert ist. Beispielsweise kann die Steuerung des Fahrpedalsystems einen Prozessor und einen nicht-flüchtigen Speicher (ROM, EPROM usw.) umfassen, auf dem das Computerprogramm gespeichert ist.

### KURZE BESCHREIBUNG DER FIGUREN

Im Folgenden werden Ausführungsbeispiele der Erfindung mit Bezug auf die beiliegenden Figuren detailliert beschrieben.
Fig. 1 zeigt schematisch ein Fahrzeug gemäß einer Ausführungsform der Erfindung.
Fig. 2 zeigt ein Diagramm mit Rückstellkräften des Fahrpedals gemäß einer Ausführungsform der Erfindung.
Fig. 3 zeigt ein Flussdiagramm für ein Verfahren zum Steuern eines Fahrpedals gemäß einer Ausführungsform der Erfindung.

Grundsätzlich sind identische oder ähnliche Teile mit den gleichen Bezugszeichen versehen.

### DETAILIERTE BESCHREIBUNG VON AUSFÜHRUNGSBEISPIELEN

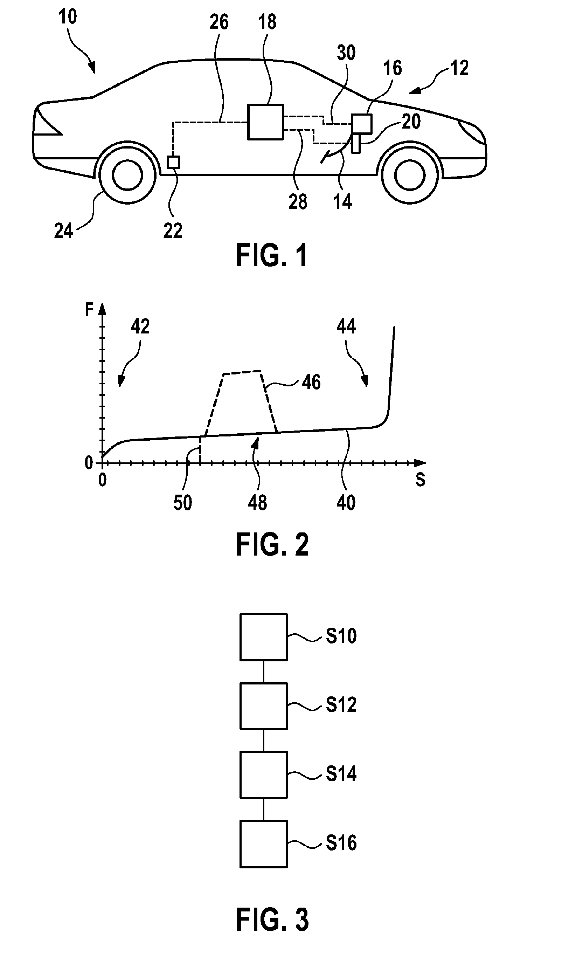

Fig. 1 zeigt ein Fahrzeug 10 mit einem Fahrpedalsystem 12. Das Fahrpedalsystem 12 umfasst ein aktives Fahrpedal 14, dessen Rückstellkraft mit einem Stellmotor 16 einstellbar ist, und eine Steuerung 18, die den Stellmotor 16 ansteuern und somit die Rückstellkraft des Fahrpedals 14 einstellen kann. Das Fahrpedal 14 weist darüber hinaus einen Sensor 20 auf, mit dem die aktuelle Position des Fahrpedals 14 bestimmt werden kann.

Mit dem Fahrpedal 18 kann der Fahrer die Geschwindigkeit des Fahrzeugs 10 einstellen. Beispielsweise wird die aktuelle Position des Fahrpedals 14 durch den Sensors 20 erfasst, an die Steuerung 24 übermittelt und in eine Kraftstoffmenge umgerechnet, die dem Motor des Fahrzeugs 10 zugeführt werden soll.

Ein Raddrehzahlsensor 22 kann die aktuelle Drehzahl der Räder 24 des Fahrzeugs 10 ermitteln und an die Steuerung 18 übermitteln.

Die Steuerung 18 kann also ein Raddrehzahlsignal 26 von dem Raddrehzahlsensor 22 empfangen und daraus ableiten, ob eine Schlechtwegstrecke vorliegt. Außerdem kann die Steuerung 18 ein Fahrpedalpositionssignal 28 empfangen und daraus eine Pendelbewegung des Fahrpedals 14 bestimmen. Über ein Steuersignal 30 an den Stellmotor 16 kann die Steuerung 18 die Empfindlichkeit des Fahrpedals 14 einstellen, indem sie die Rückstellkraft des Fahrpedals 14 erhöht bzw. vermindert.

Erkennt die Steuerung 18 eine Schlechtwegstrecke oder eine Pendelbewegung des Fahrpedals 14, kann die Steuerung 18 die Rückstellkraft des aktiven Fahrpedals 14 erhöhen, um so eine ungewollte Schwingung des Fahrpedals 14 zu dämpfen.

Fig. 2 zeigt ein Diagramm mit Rückstellkräften des Fahrpedals 14. In dem Diagramm ist eine Grundkraft 40 des Fahrpedals 14 als durchgezogene Linie dargestellt. Im Diagramm ist nach oben die Rückstellkraft bzw. die Pedalkraft F und nach rechts die Fahrpedalposition bzw. der Pedalweg S aufgetragen. Die Grundkraft 40 des Fahrpedals 14 steigt dabei von einer Ruhestellung 42 zuerst flach und in einer Endstellung 44 dann stark an. Im Bereich zwischen der Ruhestellung 42 und der Endstellung 44 verläuft die Kurve der Grundkraft 40 relativ flach.

In der Fig. 2 ist nun dargestellt, wie die Rückstellkraft 46 in einem Bereich 48 oberhalb einer aktuellen Fahrpedalposition 50 gegenüber der Grundkraft 40 erhöht werden kann. Oberhalb der aktuellen Fahrposition 50, die vor dem Erkennen der Schlechtwegstrecke ermittelt wurde, steigt die Rückstellkraft steil an, bis zu einem Wert, der mehrfach (beispielsweise drei oder vierfach) gegenüber dem entsprechenden Wert in der Grundkraft 40 erhöht ist. Vor der Endstellung 44 kann die erhöhte Rückstellkraft 46 auch wieder zum Wert der Grundstellung 40 hin abfallen.

Da die aktuelle Fahrpedalposition 50 variabel ist, kann der Bereich 48 mit erhöhter Kraft 46 eine variable Position aufweisen.

Fig. 3 zeigt ein Flussdiagramm für ein Verfahren zum Steuern des Fahrpedals 14, das von der Steuerung 18 durchgeführt werden kann.

In einem Schritt S10 wird die aktuelle Fahrpedalposition 50 kontinuierlich ermittelt. Dazu empfängt die Steuerung 18 Fahrpedalpositionssignale 28 vom Fahrpedal 14.

In einem Schritt S12 wird ermittelt, ob sich das Fahrzeug 10 auf einer Schlechtwegstrecke befindet. Dazu empfängt die Steuerung kontinuierlich Raddrehzahlsignale 26 von dem Sensor 22 und wertet diese aus.

Erkennt die Steuerung 18 das Vorliegen einer Schlechtwegstrecke, erhöht die Steuerung 18 im Schritt S14 die Rückstellkraft 46 in einem Bereich 48 oberhalb der zuletzt ermittelten aktuellen Fahrpedalposition 50. Weiter überprüft die Steuerung 18 durch Auswerten des Fahrpedalpositionssignals 28, ob das Fahrpedal 14 pendelt. Ist dies der Fall erhöht sie die Rückstellkraft 46 weiter. Ansonsten kann die Steuerung 18 auch die erhöhte Rückstellkraft 46 reduzieren, wenn keine Pendelbewegungen des Fahrpedals 14 vorliegen.

Im Schritt S16 wird ermittelt, ob die Schlechtwegstrecke zu Ende ist. Ist dies der Fall, stellt die Steuerung 18 wieder die Grundkraft 40 ein.

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Fahrpedalsystem (12) für ein Fahrzeug (10), umfassend:
ein Fahrpedal (14) zum Einstellen der Geschwindigkeit des Fahrzeugs (10) durch einen Fahrer;
eine Steuerung (18), die dazu ausgeführt ist ein Schlechtwegsignal zu erfassen und das Fahrpedal (14) anzusteuern;
wobei das Fahrpedal (14) dazu ausgeführt ist, eine variable Rückstellkraft (46) einzustellen;
**dadurch gekennzeichnet, dass**
die Steuerung (18) dazu ausgeführt ist, die Rückstellkraft (46) zumindest in einem Teilbereich (48) eines Pedalwegs des Fahrpedals (14) zu erhöhen, wenn das Schlechtwegsignal erfasst wird.

2. Fahrpedalsystem (12) nach Anspruch 1,
wobei die Steuerung (18) dazu ausgeführt ist, das Schlechtwegsignal aus der aktuellen Raddrehzahl zu ermitteln.

3. Fahrpedalsystem (12) nach Anspruch 1 oder 2,
wobei die Steuerung (18) dazu ausgeführt ist, zusätzlich eine Pendelbewegung des Fahrpedals (14) zu erkennen;
wobei die Steuerung (18) dazu ausgeführt ist, die Rückstellkraft (46) weiter zu erhöhen, bis die Pendelbewegung unter einen vorgegebenen Grenzwert sinkt.

4. Fahrpedalsystem (12) nach einem der vorhergehenden Ansprüche,
wobei die Steuerung (18) dazu ausgeführt ist, ein aktuelle Fahrpedalposition (50) zu speichern;
wobei die Steuerung (18) dazu ausgeführt ist, die Rückstellkraft (46) in einem Teilbereich (48) des Pedalwegs des Fahrpedals (14) in der Umgebung einer aktuellen Fahrpedalposition (50) zu erhöhen, Fahrpedalsystem (12) nach Anspruch 4,
wobei der Teilbereich (48) oberhalb der aktuellen Fahrpedalposition (50) liegt.

5. Fahrzeug (10) mit einem Fahrpedalsystem (12) nach einem der vorhergehenden Ansprüche.

6. Verfahren zum Steuern eines aktiven Fahrpedals (14) eines Fahrzeugs (10), umfassend die Schritte:
Erfassen eines Schlechtwegsignals;
Erhöhen der Rückstellkraft (46) des Fahrpedals (14) zumindest in einem Teilbereich (48) eines Pedalwegs des Fahrpedals (14), wenn das Schlechtwegsignal erfasst wird.

7. Computerprogamm, das, wenn es auf einem Prozessor ausgeführt wird, den Prozessor dazu anleitet, die Schritte des Verfahrens nach Anspruch 7 auszuführen.

8. Computerlesbares Medium, auf dem ein Computerprogramm nach Anspruch 8 gespeichert ist.
